(19) Europäisches Patentamt
European Patent Office
Office européen des brevets

(11) **EP 2 734 718 B1**

(12) **EUROPÄISCHE PATENTSCHRIFT**

(45) Veröffentlichungstag und Bekanntmachung des Hinweises auf die Patenterteilung:
**16.09.2015 Patentblatt 2015/38**

(21) Anmeldenummer: **12732542.1**

(22) Anmeldetag: **29.06.2012**

(51) Int Cl.:
*F01N 9/00* (2006.01)   *F01N 3/20* (2006.01)

(86) Internationale Anmeldenummer:
**PCT/EP2012/002744**

(87) Internationale Veröffentlichungsnummer:
**WO 2013/010625 (24.01.2013 Gazette 2013/04)**

(54) **VERFAHREN ZUR ERMITTLUNG EINER QUALITÄT EINER ZUR STICKOXIDVERMINDERUNG EINGESETZTEN, AMMONIAK ENTHALTENDEN REDUKTIONSMITTELLÖSUNG**

METHOD FOR DETERMINING A QUALITY OF A REDUCING AGENT SOLUTION CONTAINING AMMONIA USED TO REDUCE NITROGEN OXIDE

PROCÉDÉ PERMETTANT DE DÉTERMINER LA QUALITÉ D'UNE SOLUTION D'AGENT DE RÉDUCTION CONTENANT DE L'AMMONIAC ET UTILISÉE POUR DIMINUER L'OXYDE D'AZOTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2011 DE 102011108019**

(43) Veröffentlichungstag der Anmeldung:
**28.05.2014 Patentblatt 2014/22**

(73) Patentinhaber: **Daimler AG**
**70327 Stuttgart (DE)**

(72) Erfinder:
• **CHRISTNER, Bernd**
**72584 Hülben (DE)**
• **HOFMANN, Uwe**
**64385 Reichelsheim (DE)**
• **PETERS, Tobias**
**72810 Gomaringen (DE)**

(74) Vertreter: **JENSEN & SON**
**366-368 Old Street**
**London**
**EC1V 9LT (GB)**

(56) Entgegenhaltungen:
**EP-A1- 1 681 443     EP-A1- 1 830 040**
**WO-A1-2010/066546   WO-A1-2011/078692**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Ermittlung einer Qualität einer zur Stickoxidverminderung in einem SCR-Abgasreinigungssystem einer Brennkraftmaschine eingesetzten Ammoniak enthaltenden Reduktionsmittellösung.

Zur katalytisch unterstützten Entfernung von Stickoxiden (NOx) aus Brennkraftmaschinenabgasen ist es bekannt, dem Abgas der Brennkraftmaschine wässerige Harnstofflösung als ein Ammoniak ($NH_3$) enthaltendes Reduktionsmittel zuzugeben. Im heißen Abgas wird durch Thermolyse und/oder Hydrolyse $NH_3$ als eigentliches selektives Reduktionsmittel in Bezug auf die NOx-Reduktion an einem so genannten SCR-Katalysator freigesetzt. Dabei ergibt sich das Problem, eine für die angestrebte Reinigungswirkung passende Dosiermenge für das Reduktionsmittel zu ermitteln, wobei außerdem eine Überdosierung, die einen unerwünschten Schlupf von $NH_3$ zur Folge haben kann, vermieden werden sollte. Weiterhin beeinflusst naturgemäß die Konzentration von Ammoniak bzw. von Harnstoff im Reduktionsmittel die einzustellende Dosiermenge entscheidend. Um diese Einflussgröße zu berücksichtigen, wurden bereits verschiedentlich sensorbasierte Diagnoseverfahren zur Ermittlung der durch die Ammoniak- bzw. Harnstoffkonzentration bestimmten Qualität der Reduktionsmittellösung vorgeschlagen, was jedoch mit einem entsprechenden Hardwareaufwand verbunden ist.

Unter Vermeidung diese Aufwands wird in der DE 102007022594 vorgeschlagen, die Qualität der Reduktionsmittellösung unter bestimmten Betriebsbedingungen anhand eines stromab des SCR-Katalysators ermittelten Ammoniakschlupfes zu bewerten. Generell ist es jedoch wünschenswert, die Abgabe von Schadstoffen mit dem Abgas von Brennkraftmaschinen und somit auch einen Ammoniakschlupf so gering als möglich zu halten. Aus der EP1830040A1 ist auch ein alternatives Verfahren zur Ermittlung der Qualität einer Reduktionsmittellösung bekannt.

Aufgabe der Erfindung ist es daher, ein Verfahren anzugeben, mit welchem auf apparativ wenig aufwändige Weise und unter weitgehender Vermeidung von schädlichen Emissionen möglichst zuverlässig Aussagen über eine insbesondere verminderte Qualität einer zur Stickoxidverminderung eingesetzten Reduktionsmittellösung erhalten werden können.

Diese Aufgabe wird durch ein Verfahren mit den Merkmalen des Anspruchs 1 gelöst.

Bei dem erfindungsgemäßen Verfahren zur Ermittlung einer Qualität einer zur Stickoxidverminderung in einem SCR-Abgasreinigungssystem einer Brennkraftmaschine eingesetzten Ammoniak enthaltenden Reduktionsmittellösung wird eine Dosiereinheit zur Abgabe vorgebbarer Soll-Dosiermengen der Reduktionsmittellösung in das Brennkraftmaschinenabgas angesteuert und mittels eines stromab eines SCR-Katalysators des SCR-Abgasreinigungssystems angeordneten NOx-Sensors mit einer Querempfindlichkeit gegenüber Ammoniak wird eine mit dem Wirkungsgrad des SCR-Katalysators wenigstens korrelierende Wirkungsgradgröße ermittelt und mit einem vorgebbaren Grenzwert verglichen. Dabei sind in einem ersten Verfahrensschritt in einem normalen Dosierbetrieb eine erste Soll-Dosiermenge und ein erster Grenzwert vorgesehen. Im Falle einer durch den Vergleich festgestellten, einer nicht ordnungsgemäßen Funktion des SCR-Abgasreinigungssystems entsprechenden Wirkungsgradgröße wird der normale Dosierbetrieb abgebrochen und in einem zweiten Verfahrensschritt in einen Diagnosebetrieb gewechselt, in welchem für eine erste Zeitspanne eine gegenüber der ersten Soll-Dosiermenge erhöhte zweite Soll-Dosiermenge und ein zweiter Grenzwert vorgesehen sind. Wird nach Ablauf der ersten Zeitspanne eine vorgebbaren Abweichung der Wirkungsgradgröße vom zweiten Grenzwert festgestellt, so wird in einem dritten Verfahrensschritt eine Konditionierung des SCR-Katalysators derart durchgeführt, dass eine im SCR-Katalysator gespeicherte Ammoniakmenge einen vorgebbaren Speichermengengrenzwert unterschreitet. Nachfolgend sind in einem Adaptionsbetrieb als viertem Verfahrensschritt für eine vorgebbare zweite Zeitspanne eine dritte Soll-Dosiermenge und ein dritter Grenzwert vorgesehen, wobei im Falle einer nach Ablauf der zweiten Zeitspanne festgestellten vorgebbaren Abweichung der Wirkungsgradgröße vom dritten Grenzwert eine fehlerhafte Qualität der Reduktionsmittellösung diagnostiziert wird.

Als Reduktionsmittel kommt in erster Linie Harnstoff, Ammoniumcarbamat, Ammoniumformiat und/oder ein ähnlicher, zu Abspaltung von $NH_3$ befähigter Stoff in Frage, welcher in Form einer insbesondere wässrigen Lösung vorliegt. Die Reduktionsmittellösung kann dem Abgas in Reinform oder als aerosolartiger Nebel mittels einer stromauf des SCR-Katalysators in einer entsprechenden Abgasleitung des SCR-Abgasreinigungssystems angeordneten Dosiereinheit zugegeben werden. Die Dosiereinheit ist vorzugsweise in der Art eines Dosierventils mit ein oder mehreren Düsenöffnungen ausgebildet. Der SCR-Katalysator ist vorzugsweise als Wabenkörper in Form eines extrudierten Vollkatalysators auf der Basis von Wolframoxid bzw. Vanadiumpentoxid oder als beschichteter zeolithischer Katalysator auf der Basis eines Kupfer oder Eisen enthaltenden Zeoliths ausgebildet. Es ist bekannt, dass diese Katalysatortypen beträchtliche $NH_3$-Mengen speichern können, wobei gespeichertes $NH_3$ als Reaktionspartner für eine Reduktion von mit dem Abgas zugeführten NOx wirkt. Nachfolgend wird von der im SCR-Katalysator gespeicherten $NH_3$-Menge auch von einem $NH_3$-Füllstand gesprochen. Vorzugsweise wird als $NH_3$-Füllstand eine relative Größe betrachtet, welche die gespeicherte $NH_3$-Menge in Bezug auf die unter den aktuellen Bedingungen maximal speicherbare $NH_3$-Menge angibt.

Mittels des stromab des SCR-Katalysators angeordneten NOx-Sensor mit Empfindlichkeit gegenüber NOx und $NH_3$ wird eine mit dem Wirkungsgrad des SCR-Katalysators wenigstens korrelierende Wirkungsgradgröße ermittelt. Durch einen generell und vorzugsweise laufend oder wiederholend in kurzen Zeitabständen vorgenommenen Vergleich der ermittelten Wirkungsgradgröße mit einem vorgebbaren Grenzwert, im normalen Dosierbetrieb speziell einem vorgebbaren ersten Grenzwert, ist eine Überwachung der Funktion des SCR-Abgasreinigungssystems und insbesondere des SCR-Katalysators ermöglicht. Die Wirkungsgradgröße ist dabei bevorzugt ein Wirkungsgrad bezüglich der NOx-Umsatzfähigkeit des SCR-Katalysators oder wird durch den Signalwert des NOx-Sensors selbst repräsentiert. Weiterhin kann mittels des NOx-Sensors der für den NOx-Umsatz maßgebende NH3-Füllstand des SCR-Katalysators kontrolliert und dieser als Wirkungsgradgröße herangezogen werden. Im normalen Dosierbetrieb wird die Dosiermenge des Reduktionsmittels laufend derart angepasst, dass die Wirkungsgradgröße innerhalb eines vorgebbaren Wertebereichs liegt. Ein ungenügender NOx-Umsatz bzw. eine Unterdosierung des Reduktionsmittels kann beispielsweise durch eine erhöhte NOx-Konzentration erkannt und gegebenenfalls durch Anpassung der Dosiermenge korrigiert werden. Eine verminderte NH3-Speicherfähigkeit des SCR-Katalysators bzw. eine Überdosierung kann durch eine erhöhte NH3-Konzentration erkannt und bei Bedarf ebenfalls durch Anpassung der Dosiermenge korrigiert werden.

Liegt die ermittelte Wirkungsgradgröße innerhalb eines vorgebbaren Bereichs um einen Sollwert, so kann von einer ordnungsgemäßen Funktion des SCR-Abgasreinigungssystems ausgegangen werden und es besteht im Allgemeinen keine Veranlassung, den normalen Dosierbetrieb zu unterbrechen bzw. abzubrechen. Ergibt der Vergleich jedoch insbesondere wegen einer Überschreitung des ersten Grenzwerts, dass eine nicht ordnungsgemäße Funktion des SCR-Abgasreinigungssystems vorliegt, so wird dies als Störung behandelt, welche erfindungsgemäß weiter analysiert wird. Im Falle einer durch den NOx-Sensor erfassten Konzentration als Wirkungsgradgröße liegt der erste Grenzwert vorzugsweise in einem Bereich zwischen 5 ppm und 50 ppm NOx bzw. NH3.

Erfindungsgemäß wird dann, wenn eine nicht ordnungsgemäße Funktion des SCR-Abgasreinigungssystems festgestellt wird, der normale Dosierbetrieb abgebrochen und in einen Diagnosebetrieb gewechselt, in welchem für eine erste Zeitspanne eine gegenüber der ersten Soll-Dosiermenge erhöhte zweite Soll-Dosiermenge und ein zweiter Grenzwert vorgesehen sind. Dabei wird der zweite Grenzwert vorzugsweise in Abhängigkeit der Erhöhung der Soll-Dosiermenge vorgegeben. Der Signalverlauf des NOx-Sensors als Reaktion auf die erhöhte Soll-Dosiermenge wird somit bewertet und es wird anhand der Bewertung spätestens nach Ablauf der ersten Zeitspanne entschieden, ob die zunächst detektierte Störung einer weiteren Diagnose bedarf. Erfindungsgemäß wird dann, wenn nach Ablauf der ersten Zeitspanne eine vorgebbare Abweichung der ermittelten Wirkungsgradgröße vom zweiten Grenzwert festgestellt wird, ein Verfahrensschritt zur Konditionierung des SCR-Katalysators eingeleitet bzw. durchgeführt. In diesem Konditionierungsschritt wird durch eine geeignete Dosierung des Reduktionsmittels und/oder ein geeignetes NOx-Angebot erreicht, dass die im SCR-Katalysator gespeicherte NH3-Menge einen vorgebbaren Speichermengengrenzwert unterschreitet. Letzterer ist bevorzugt so gewählt, dass ein Reduktionsmittel- bzw. NH3-Schlupf mit hinreichender Sicherheit ausgeschlossen werden kann. Auf diese Weise wird somit eine infolge der vorhergehenden Überdosierung gegebenenfalls verursachte erhöhte NH3-Speichermenge im SCR-Katalysator abgebaut und ein gut definierter Katalysatorzustand erzielt.

Erfindungsgemäß ist nach dem Konditionierschritt ein Adaptionsbetrieb als weiterer Verfahrensschritt vorgesehen. Im Adaptionsbetrieb sind für eine vorgebbare zweite Zeitspanne eine dritte Soll-Dosiermenge und ein dritter Grenzwert vorgesehen. Wird nach Ablauf der zweiten Zeitspanne eine vorgebbare Abweichung der Wirkungsgradgröße vom dritten Grenzwert festgestellt, so wird eine fehlerhafte Qualität der Reduktionsmittellösung diagnostiziert. Infolge der dem Adaptionsbetrieb vorangegangenen Verfahrensschritte ist ein Ausschluss von anderweitigen Fehlerquellen als Ursache der ursprünglich detektierten Störung mit hoher Sicherheit ermöglicht und es kann aus der Abweichung der Wirkungsgradgröße vom dritten Grenzwert sehr zuverlässig auf eine fehlerhafte und insbesondere verminderte Qualität der Reduktionsmittellösung geschlossen werden.

In Ausgestaltung der Erfindung ist eine Steuereinheit mit einem das SCR-Abgasreinigungssystem wenigstens teilweise beschreibenden Rechenmodell derart vorgesehen, dass eine Soll-Dosiermenge ermittelbar ist, mit welcher vorgebbare Werte oder Wertebereiche für eine Speichermenge von im SCR-Katalysator gespeichertem NH3 oder einen Wirkungsgrad für einen NOx-Umsatz des SCR-Katalysators geregelt oder gesteuert eingestellt werden können und ferner Grenzwerte für die Wirkungsgradgröße eines ordnungsgemäßen SCR-Abgasreinigungssystems festgelegt werden können. Insbesondere für einen normalen Dosierbetrieb erfolgt bevorzugt eine Einregelung auf die vom Rechenmodell modellierte Größe des NH3-Füllstands im SCR-Katalysator. Dabei werden bevorzugt eine aufgrund der eingestellten Dosiermenge resultierende NH3-Zuführrate und eine modellierte NH3-Verbrauchsrate infolge von Abreaktion mit NOx und Sauerstoff und/oder Schlupf durch eine laufend durchgeführte Integration bilanziert und die Dosiermenge so eingestellt, dass ein angestrebter NH3-Füllstand im Katalysator und damit ein angestrebter Katalysatorwirkungsgrad wenigstens annähernd erreicht werden. Insbesondere bei infolge von hohen Katalysatortemperaturen verminderter NH3-Speicherfähigkeit des SCR-Katalysators kann ein Wechsel zu einer modellbasierte Wirkungsgradsteuerung zur Erreichung eines durch das Rechenmodell vorgebbaren Katalysator-Soll-Wirkungsgrads vorgesehen sein. In jedem Fall ist durch eine vom Rechenmodell vorgenommene Verknüpfung von Messwerten aktueller Betriebsgrößen wie Temperatur Abgasdurchsatz usw. und gespeicherten Kennwerten insbesondere des SCR-Katalysators eine Bestimmung bzw. Festlegung von Grenzwerten für die Wirkungsgradgröße eines ordnungsgemäßen SCR-Abgasreinigungssystems ermöglicht. Somit ist einerseits eine zuverlässige Fehlererkennung und andererseits eine verbesserte Analyse eines detektierten Fehlers ermöglicht.

In weiterer Ausgestaltung des Verfahrens wird im Diagnosebetrieb eine um einen Faktor von 1,1 bis 5 gegenüber der ersten Soll-Dosiermenge erhöhte zweite Soll-Dosiermenge eingestellt. Dies ermöglicht eine kurze erste Zeitspanne und daher trotz der Überdosierung auch einen geringen Emissionswert von gegebenenfalls auftretendem $NH_3$-Schlupf. Infolge der $NH_3$-Überdosierung im Diagnosebetrieb ist trotz der Querempfindlichkeit des stromab des SCR-Katalysators angeordneten NOx-Sensors dessen Signal eindeutig interpretierbar.

In weiterer Ausgestaltung des Verfahrens ist die erste Zeitspanne in Abhängigkeit von der zweiten Soll-Dosiermenge so gewählt, dass eine über die erste Zeitspanne mit der Reduktionsmittellösung dosierte $NH_3$-Menge einer in einem SCR-Katalysator mit an einer Toleranzgrenze vermindertem $NH_3$-Speichervermögen unter den vorliegenden Bedingungen einspeicherbaren $NH_3$-Menge entspricht. Zur Festlegung der ersten Zeitspanne wird demnach von einem grenzwertig gealterten SCR-Katalysator mit einer alterungsbedingt entsprechend verschlechterten $NH_3$-Speicherfähigkeit ausgegangen. Die in der ersten Zeitspanne mit dem Reduktionsmittel angebotene $NH_3$-Menge würde deshalb allenfalls bei einem unzulässig stark gealterten SCR-Katalysator zu einem spürbaren bzw. detektierbaren $NH_3$-Schlupf führen. Infolge der erfindungsgemäßen Festlegung der ersten Zeitspanne ist eine unerwünschte zusätzliche Schadstoffemission im Diagnosebetrieb besonders zuverlässig vermieden und andererseits eine Katalysatoralterung detektierbar.

In weiterer Ausgestaltung des Verfahrens werden zur Konditionierung eine gegenüber der ersten Soll-Dosiermenge verminderte oder auf Null reduzierte Soll-Dosiermenge und/oder eine gegenüber einem normalen Brennkraftmaschinenbetrieb erhöhte NOx-Rohemission eingestellt. Dies ermöglicht einen besonders raschen Abbau einer infolge der vorangegangenen $NH_3$-Überdosierung erhöhten $NH_3$-Speichermenge im SCR-Katalysator. Andererseits wird für den SCR-Katalysator ein definierter Beladungszustand nach Abschluss des dritten Verfahrensschritts erreicht.

Eine weitere Verbesserung der Reproduzierbarkeit in Bezug auf die vorgesehene Konditionierung des SCR-Katalysators kann erzielt werden, wenn in weiterer Ausgestaltung des Verfahrens die Bedingungen der Konditionierung so lange aufrecht erhalten bleibe, bis infolge einer Abreaktion von im SCR-Katalysator mit im Brennkraftmaschinenabgas enthaltenem NOx eine im SCR-Katalysator gespeicherte $NH_3$-Menge einen für einen $NH_3$-Schlupf maßgebenden Schwellenwert unterschritten hat.

In weiterer Ausgestaltung des Verfahrens ist zur gesteuerten oder geregelten Einstellung der Speichermenge von im SCR-Katalysator gespeichertem $NH_3$ oder des Wirkungsgrads des SCR-Katalysators durch die vom Rechenmodell ermittelte Dosiermenge ein die Dosiermenge korrigierender adaptierbarer Korrekturwert vorgesehen. Somit ist erfindungsgemäß die Möglichkeit vorgesehen, eine direkt auf die modellierte Dosiermenge einwirkende Korrektur vorzunehmen. Auf diese Weise können Störeinflüsse, beispielsweise allmählich fortschreitende Alterungs- oder Drifteffekte, kompensiert werden. Insbesondere ist eine Kompensation von nicht oder nur unzureichend vom Rechenmodell berücksichtigbaren Störeinflüssen ermöglicht. In diesem Zusammenhang ist es besonders vorteilhaft, wenn in weiterer Ausgestaltung des Verfahrens im Adaptionsbetrieb eine gesteuerte Einstellung der Dosiermenge für einen vorgebbaren Soll-Wirkungsgrad des SCR-Katalysators und eine Ermittlung des Ist-Wirkungsgrads des SCR-Katalysators vorgenommen werden, und ferner ein Wert für den Korrekturwert ermittelt wird, welcher für eine vorgebbare Annäherung des Ist-Wirkungsgrads an den Soll-Wirkungsgrad erforderlich ist oder erforderlich wäre und daraufhin eine fehlerhafte Qualität der Reduktionsmittellösung diagnostiziert wird, wenn der ermittelte Korrekturwert außerhalb eines vorgebbaren Sollbereichs liegt. In diesem Fall ist eine Adaptierung des Rechenmodells mittels einer Veränderung des Korrekturwerts nicht oder nur unter nicht tolerierten Einschränkungen ermöglicht. Insbesondere bei einer ursprünglich unzulässig verminderten Katalysatorwirkung kann eine entsprechend große erforderliche Änderung des Korrekturwerts in Verbindung mit den anderen im erfindungsgemäßen Verfahren ermittelten Informationen plausibel nur durch eine unzulässig verminderte Reduktionsmittelqualität erklärt werden.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:

Fig. 1 ein schematisches Blockbild eines Kraftfahrzeug-Verbrennungsmotors mit einer angeschlossenen Abgasreinigungsanlage,

Fig. 2a und 2b Zeitdiagramme für beispielhafte Verläufe einer Wirkungsgradgröße (Fig. 2a) und einer festgelegten Reduktionsmittel- Solldosiermenge (Fig. 2b)

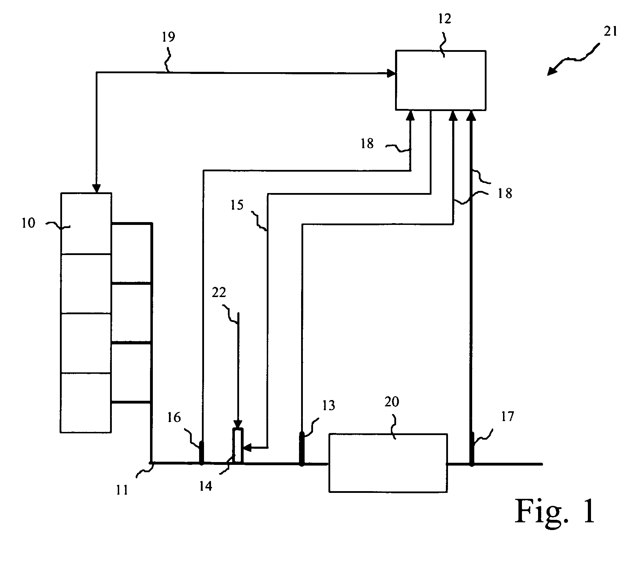

Fig. 1 zeigt beispielhaft ein schematisches Blockbild einer bevorzugt als Dieselmotor ausgebildeten Brennkraftmaschine 10 mit zugehörigem SCR-Abgasreinigungssystem 21. Das von der Brennkraftmaschine 10 ausgestoßene Abgas wird von einer Abgasleitung 11 aufgenommen und durchströmt einen SCR-Katalysator 20. Eingangsseitig des SCR-Katalysators 20 ist ein Temperatursensor 13 zur Messung der Abgastemperatur in der Abgasleitung 11 und weiter stromaufwärts des Temperatursensors 13 eine Dosiereinheit 14 zur Abgabe einer Ammoniak enthaltenden Reduktionsmittellösung in das Abgas angeordnet. Vorzugsweise wird eine wässrige Harnstofflösung mit einer spezifizierten Harnstoffkonzentration von etwa 32 Massenprozent eingesetzt. Der im Reduktionsmittel enthaltene Ammoniak wird je nach Betriebsbedingungen und Ausführungsform des SCR-Katalysators 20 mehr oder weniger stark im SCR-Katalysator 20 gespeichert und reagiert dort in einer selektiven katalytischen Reaktion mit im Abgas enthaltenem NOx zu ungiftigen Produkten. Die Versorgung der Dosiereinheit 14 mit der Reduktionsmittellösung erfolgt über eine Leitung 22 aus einem nicht dargestellten Behälter. Stromauf der Dosiereinheit 14 und ausgangsseitig des SCR-Katalysators 20 sind NOx-Sensoren 16 und 17 in der Abgasleitung 11 angeordnet. Insbesondere der NOx-Sensor 17 ist derart ausgebildet, dass er ein sowohl mit der NOx-Konzentration als auch mit der NH3-Konzentration des Abgases korrelierendes Signal abgeben kann. Die NOx-Sensoren 16, 17 sowie der Temperatursensor 13 sind über Signalleitungen 18 mit einer Steuereinheit 12 verbunden. Die Steuereinheit 12 ist ferner über eine Steuerleitung 15 mit der Dosiereinheit 14 und mit einer bidirektionalen Signalleitung 19 mit der Brennkraftmaschine 10 verbunden. Über die Steuerleitung 15 wird die Dosiereinheit 14 zur Abgabe einer durch die Steuereinheit 12 festgelegten Dosiermenge der Reduktionsmittellösung angesteuert. Mittels der Signalleitung 19 kommuniziert die Steuereinheit 12 mit der Brennkraftmaschine 10 und kann einerseits Informationen über deren Betriebsgrößen wie ein abgegebenes Drehmoment oder eine Drehzahl empfangen und andererseits Betriebsgrößen der Brennkraftmaschine 10 bedarfsgerecht einstellen. Die Steuereinheit 12 verfügt über eine nicht dargestellte Rechen- und Speichereinheit und kann unter Verarbeitung der empfangenen Signale sowie unter Rückgriff auf gespeicherte Kennfelder komplexe Steuer- und Regelaufgaben zum Betrieb der Brennkraftmaschine 10 und des SCR-Abgasreinigungssystems 21 wahrnehmen. Insbesondere ist ein das SCR-Abgasreinigungssystem 21 wenigstens teilweise beschreibendes Rechenmodell vorgesehen, mittels welchem Betriebsgrößen des SCR-Abgasreinigungssystems 21 erfasst, verarbeitet und geregelt oder gesteuert eingestellt werden können.

Es versteht sich, dass in der Abgasleitung 11 weitere, nicht eingezeichnete Komponenten angeordnet sein können. So z.B. ein zusätzlicher Oxidationskatalysator oder ein Partikelfilter, die stromab oder stromauf des SCR-Katalysators 20 in der Abgasleitung 11 verbaut sein können. Ferner können weitere Sensoren für Abgaskomponenten bzw.-Betriebsgrößen in der Abgasleitung 11 angeordnet und mit der Steuereinheit 12 zur Verbesserung des Steuer- bzw. Regelverhaltens verbunden sein.

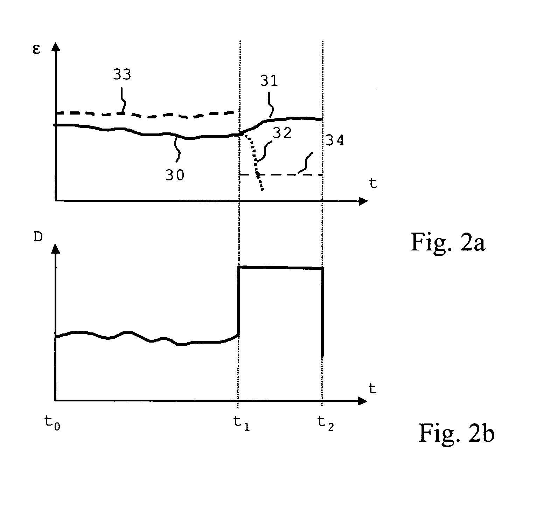

Nachfolgend werden unter Bezug auf die in Fig. 2a und 2b dargestellten Zeitdiagramme bevorzugte Vorgehensweisen zur Durchführung des erfindungsgemäßen Verfahrens näher erläutert. Dabei sind in Fig. 2a beispielhafte zeitliche Verläufe einer Wirkungsgradgröße des SCR-Abgasreinigungssystems 21 und in Fig. 2 ein paralleler Verlauf einer Soll-Dosiermenge D, wie sie von einem in der Steuereinheit 12 laufenden Rechenmodellprogramm ermittelt und zu deren Abgabe die Dosiereinheit 14 angesteuert wurde.

In einem Zeitbereich $t_0 < t < t_1$ läuft dabei ein normaler Dosierbetrieb ab. In diesem erfolgt bevorzugt eine modellbasierte $NH_3$-Füllstandsregelung oder eine modellbasierte Wirkungsgradsteuerung. Bei der modellbasierten $NH_3$-Füllstandsregelung wird ein modellbasierter Wert für den $NH_3$-Füllstand des SCR-Katalysators 20 in einer feed-back-Regelung auf einen vorgebbaren Sollwert eingeregelt und eine hierfür erforderliche Soll-Dosiermenge ermittelt, zu deren Abgabe die Dosiereinheit 14 angesteuert wird. Bei der modellbasierten Wirkungsgradsteuerung erfolgt eine feed-forward-Steuerung bei welcher die Dosiereinheit 14 zur Abgabe einer Soll-Dosiermenge D angesteuert wird, welche gemäß dem Rechenmodell erforderlich ist, um einen vorgebbaren Soll-Wirkungsgrad des SCR-Katalysators 20 in Bezug auf dessen NOx-Umsetzung zu erzielen. In beiden Fällen resultiert für das SCR-Abgasreinigungssystem 21 ein Wirkungsgrad ε des SCR-Katalysators 20, welcher überwacht wird und dessen Verlauf in Fig. 2a durch eine mit 30 bezeichnete Spur beispielhaft wiedergegeben ist. Vorliegend wird der Wirkungsgrad ε des SCR-Katalysators 20 aus von Signalen der NOx-Sensoren 16 und 17 ermittelten NOx- bzw. $NH_3$-Konzentrationswerten K1 und K2 nach der Formel

$$\varepsilon = 1 - K2/K1 \qquad (1)$$

errechnet und als maßgebend für die Funktion des SCR-Abgasreinigungssystems 21 angesehen. Anstelle der mittels des stromauf des SCR-Katalysators 20 angeordneten NOx-Sensors 16 messtechnisch gewonnenen NOx-Konzentration kann auch eine aus einem Kennfeld entsprechend den vorliegenden Brennkraftmaschinen-Betriebsbedingungen ausgelesene NOx-Konzentration verwendet werden.

Zur Bewertung des Abgasreinigungssystems 21 in Bezug auf dessen ordnungsgemäße Funktion wird der ermittelte Wirkungsgrad ε mit einem Soll-Wirkungsgrad $\varepsilon_{soll}$ entsprechend des bei modellbasierter $NH_3$-Füllstandsregelung eingeregelten $NH_3$-Füllstands oder der bei Wirkungsgradsteuerung gesteuert eingestellten Soll-Dosiermenge D verglichen. Ein beispielhafter Verlauf des Soll-Wirkungsgrads $\varepsilon_{soll}$ ist in Fig. 2a durch die gestrichelte Spur 33 dargestellt. Eine nicht ordnungsgemäße Funktion wird beispielsweise dann als gegeben angesehen, wenn über die gesamte oder den größten Teil der Intervalllänge $t_0 < t < t_1$ der ermittelte Wirkungsgrad $\varepsilon$ um mehr als ein vorgebbares Maß vom Soll-Wirkungsgrad $\varepsilon_{soll}$ abweicht. Ein bevorzugtes Bewertungskriterium ist gemäß Formel

$$\left| \int (\varepsilon_{soll} - \varepsilon)\, {}^*dt \right| < \delta \qquad (2)$$

definiert, wobei Abweichungen zwischen dem Soll-Wirkungsgrad $\varepsilon_{soll}$ und dem Wirkungsgrad $\varepsilon$ über die Intervalllänge $t_0$ bis $t_1$ aufintegriert und betragsmäßig mit einem vorgebbaren Grenzwert $\delta$ verglichen werden. Die Intervalllänge wird dabei bevorzugt anhand eines vorgebbaren Summenwertes für eine NOx-Rohemission der Brennkraftmaschine 10 oder einen Summenwert für eine vom NOx-Sensor 16 gelieferte NOx-Konzentration oder durch eine feste Zeitspanne festgelegt. Vorzugsweise ist vorgesehen, laufend entsprechende Integrationsintervalle aneinanderzureihen und so das SCR-Abgasreinigungssystem 21 laufend zu überwachen. Wird der Grenzwert $\delta$ überschritten und die Ungleichung (2) somit nicht erfüllt, so wird eine nicht ordnungsgemäße Funktion diagnostiziert. Es versteht sich, dass auch andere geeignete Wirkungsgradgrößen bewertet und/oder zusätzlich Bedingungen zur Beurteilung einer ordnungsgemäßen Funktion des Abgasreinigungssystems 12, etwa zu einer weiter verbesserten statistischen Absicherung, vorgesehen sein können.

Wird eine nicht ordnungsgemäße Funktion des SCR-Abgasreinigungssystems 21 festgestellt, so ist vorgesehen, den normalen Dosierbetrieb abzubrechen und in einen Diagnosebetrieb zu wechseln, in welchem die Dosiereinheit 14 zur Abgabe einer gegenüber dem normalen Dosierbetrieb erhöhten Soll-Dosiermenge D angesteuert wird. Dies ist im Diagramm von Fig. 2b durch den sprunghaften Anstieg der Soll-Dosiermenge D zum Zeitpunkt $t_1$ veranschaulicht. Parallel zur Erhöhung der Soll-Dosiermenge D wird ein neuer, zweiter Wert für den Soll-Wirkungsgrad $\varepsilon_{soll}$ festgelegt. Dieser ist im Diagramm von Fig. 2a durch den mit der Bezugsziffer 34 bezeichneten Kurvenast dargestellt und ist in Abhängigkeit von der Dosiermenge D im Diagnosebetrieb deutlich geringer als im normalen Dosierbetrieb gewählt. Bei einer typischerweise im Diagnosebetrieb eingestellten 2 bis 5-fachen Überdosierung ist der vorliegend durch den Soll-Wirkungsgrad $\varepsilon_{soll}$ analog Formel (1) repräsentierte Grenzwert für die Wirkungsgradgröße negativ. Für die Bedingungen des Diagnosebetriebs ist ein Zeitintervall $t_1 < t < t_2$ mit einer vorgebbaren maximalen Dauer vorgesehen. Diese maximale Dauer ist vorzugsweise so gewählt, dass die dabei dosierte NH$_3$-Menge wenigstens einer in einem SCR-Katalysator 20 mit an einer Toleranzgrenze vermindertem NH$_3$-Speichervermögen unter den vorliegenden Bedingungen einspeicherbaren NH$_3$-Menge entspricht.

In Bezug auf den im Diagnosebetrieb festgelegten zweiten Grenzwert der Wirkungsgradgröße sind als Reaktion auf die Überdosierung zwei unterschiedliche und sich einander ausschließende Ergebnisse möglich. Im ersten Fall unterschreitet die ermittelte Wirkungsgradgröße innerhalb des Zeitintervalls $t_1 < t < t_2$ den zweiten Grenzwert, im zweiten Fall tritt dieses Ergebnis nicht ein, d.h. der ermittelte Wirkungsgrad $\varepsilon$ liegt auch nach Ablauf des Zeitintervalls oberhalb des zweiten Grenzwerts. Für die weitere Vorgehensweise wird nachfolgend zunächst dieser zweite Fall betrachtet.

Wenn, wie vorliegend angenommen, der im Diagnosebetrieb ermittelte Wirkungsgrad $\varepsilon$ innerhalb des Zeitintervalls $t_1 < t < t_2$ den zweiten Grenzwert nicht unterschreitet, so ist davon auszugehen, dass die Ansteuerung der Dosiereinheit 14 zur Abgabe der erhöhten Soll-Dosiermenge D nicht zu dem erwartungsgemäßen Ergebnis einer hinter dem SCR-Katalysator 20 messbaren entsprechend erhöhten Konzentration von NH$_3$ geführt hat. Infolgedessen besteht bereits eine erhöhte Wahrscheinlichkeit dafür, dass eine der vorgegebenen Soll-Dosiermenge D der Reduktionsmittellösung entsprechende NH$_3$-Menge dem SCR-Katalysator 20 nicht zugeführt wurde, weil diese einen unzulässig verminderten Gehalt an NH$_3$ und somit eine unzulässig verminderte Qualität aufweist. Zur Verifizierung dieses zu diesem Zeitpunkt noch mit Unsicherheiten behafteten Sachverhalts ist es vorzugsweise vorgesehen, nach Ablauf des Zeitintervalls $t_1 < t < t_2$ gegebenenfalls eine Konditionierung des SCR-Katalysators 20 durchzuführen. Als notwendiges Auslösekriterium zum Übergang in die Konditionierphase ist dabei zumindest das Nicht-Unterschreiten des in der Diagnosephase vorgegebenen zweiten Grenzwerts durch den gemäß Formel (2) ermittelten Wirkungsgrad $\varepsilon$ vorgesehen. Daneben können eine oder mehrere zusätzliche Bedingungen vorgesehen sein, welche für einen Übergang in die Konditionierphase ebenfalls erfüllt sein müssen. Zu diesen Bedingungen kann beispielsweise das Vorliegen eines vorgebbaren Soll-Temperaturbereichs für den SCR-Katalysator 20 gehören.

In der Konditionierphase werden Bedingungen derart eingestellt, dass eine rechnerisch im Diagnosebetrieb dem SCR-Katalysator 20 zugeführte und dabei in diesem eingespeicherte NH$_3$-Menge durch Reaktion mit im zugeführten Abgas enthaltenem NOx soweit abgebaut wird, dass ein vorgebbarer, insbesondere für NH$_3$-Schlupf maßgebender NH$_3$-Speichermengengrenzwert unterschritten wird. Vorzugsweise wird hierfür eine gegenüber der ersten Soll-Dosiermenge D verminderte oder auf Null reduzierte Soll-Dosiermenge D und/oder eine gegenüber einem normalen Brennkraftmaschinenbetrieb erhöhte NOx-Rohemission eingestellt. Besonders bevorzugt ist es, eine modellbasierte, wirkungsgradgesteuerte Dosierung der Reduktionsmittellösung vorzunehmen, bei welcher eine vom Rechenmodell ermittelte Soll-Dosiermenge D derart vorgegeben wird, dass ein vorgebbarer Soll-Wirkungsgrad $\varepsilon_{soll}$ des SCR-Katalysators 20 erwartet werden kann. Gleichzeitig wird vorzugsweise der Brennkraftmaschinenbetrieb derart umgestellt, dass eine erhöhte NOx-Rohemission resultiert, was beispielsweise durch Veränderung einer Abgasrückführrate erfolgen kann. Bevorzugt ist es, eine Erhöhung der NOx-Rohemission um den Faktor 1,1 bis 5 gegenüber einer bei einem normalen Brennkraftmaschinenbetrieb resultierenden NOx-Rohemission einzustellen. Vorzugsweise wird die Dauer der Konditionierphase in Abhängigkeit von der NOx-Rohemission und der eingestellten Soll-Dosiermenge D vom Rechenmodell derart festgelegt, dass ein für einen $NH_3$-Schlupf maßgebender Schwellenwert für den $NH_3$-Füllstand des SCR-Katalysators 20 infolge einer Reaktion von gespeichertem $NH_3$ mit zugeführtem NOx unterschritten wird.

Nach abgeschlossener Konditionierung des SCR-Katalysators 20 ist vorgesehen, für eine vorgebbare zweite Zeitspanne in einen Adaptionsbetriebsmodus zu wechseln. Beim Eintritt in den Adaptionsbetrieb wird die Emission der erhöhten NOx-Menge durch Rückkehr zu einem normalen Brennkraftmaschinenbetrieb beendet und bevorzugt eine wirkungsgradgesteuerte Dosierung der Reduktionsmittellösung vorgenommen. Hierbei wird vom Rechenmodell ein Soll-Wirkungsgrad $\varepsilon_{soll}$ für einen funktionsfähigen SCR-Katalysator 20 vorgegeben und die Dosiereinheit 14 zur Abgabe der für diesen Soll-Wirkungsgrad $\varepsilon_{soll}$ vom Rechenmodell als erforderlich ermittelten Soll-Dosiermenge D angesteuert. Parallel hierzu wird der Wirkungsgrad $\varepsilon$ des SCR-Katalysators 20, vorzugsweise anhand der Auswertung von Formel (1) ermittelt und mit dem Soll-Wirkungsgrad $\varepsilon_{soll}$ verglichen. Weicht der ermittelte Wirkungsgrad $\varepsilon$ um mehr als ein vorgebbares Maß vom Soll-Wirkungsgrad $\varepsilon_{soll}$ ab, so wird eine fehlerhafte, insbesondere verminderte Qualität der Reduktionsmittellösung diagnostiziert und eine entsprechende Meldung ausgegeben.

In einer besonders bevorzugten Verfahrensvariante ist für das Rechenmodell zur gesteuerten oder geregelten Einstellung der Soll-Dosiermenge D ein adaptierbarer Korrekturwert F vorgesehen, mit welchem die vom Rechenmodell ermittelte Soll-Dosiermenge D multiplikativ oder additiv korrigiert wird. Dieser wird bevorzugt im Adaptionsbetrieb entsprechend der Formel

$$F = \varepsilon_{soll} / \varepsilon \qquad (3)$$

oder der Formel

$$\varepsilon = \varepsilon_{soll} +/- F \qquad (4)$$

ermittelt. Auf diese Weise ist eine Anpassung des Rechenmodells zum Ausgleich von ansonsten nicht abgefangenen Drifterscheinungen und Ungenauigkeiten ermöglicht. Wird festgestellt, dass der Korrekturwert F außerhalb vorgebbarer Grenzen liegt, so wird eine fehlerhafte Qualität der Reduktionsmittellösung diagnostiziert.

Neben der Ermittlung einer fehlerhaften Qualität der Reduktionsmittellösung sind durch das erfindungsgemäße Verfahren in vorteilhafter Weise weitere Diagnoseergebnisse ermittelbar. Zur weiteren Erläuterung wird nochmals Bezug auf Fig. 2a genommen. Wird nämlich im Diagnosebetrieb festgestellt, dass der Wirkungsgrad $\varepsilon$ entsprechend dem gepunktet dargestellten Kurvenast 32 innerhalb des Zeitintervalls $t_0 < t < t_1$ den zweiten Grenzwert für den Soll-Wirkungsgrad $\varepsilon_{soll}$ unterschreitet, so kann davon ausgegangen werden, dass bereits im vorangegangenen normalen Dosierbetrieb ein Überdosierung erfolgt ist bzw. der SCR-Katalysator 20 die dosierte $NH_3$-Menge nicht verarbeiten konnte. Dies ist als ein den Fehler auslösender erhöhter $NH_3$-Schlupf zu interpretieren, welcher sich bei der im Diagnosebetrieb eingestellten erhöhten Soll-Dosiermenge D noch verstärkt. Mögliche Ursachen sind eine tatsächlich unzulässig erhöhte Dosiermenge im normalen Dosierbetrieb oder ein unzulässig gealterter SCR-Katalysator 20 mit entsprechend vermindertem $NH_3$-Speichervermögen.

Zur weiteren Verifizierung ist es bei Unterschreiten des vorgebbaren zweiten Grenzwerts vorzugsweise vorgesehen, den Diagnosebetrieb sofort abzubrechen und eine Konditionierung des SCR-Katalysators 20 analog der weiter oben beschriebenen Vorgehensweise durchzuführen. Wird in einem nachfolgenden füllstandsgeregelten oder wirkungsgradgesteuerten Dosierbetrieb festgestellt, dass die Wirkungsgradgröße vorgebbaren Bedingungen entsprechend einem ordnungsgemäßen SCR-Abgasreinigungssystem 21 nicht genügt, insbesondere dass der Katalysatorwirkungsgrad $\varepsilon$ eine entsprechend vorgegebene Grenze unterschreitet, so wird auf einen unzulässig gealterten SCR-Katalysator 20 geschlossen und eine entsprechende Warnmeldung ausgegeben. Wird hingegen die Wirkungsgradgrenze erreicht oder überschritten, so wird der SCR-Katalysator 20 als ordnungsgemäß befunden und in einen Adaptionsbetriebsmodus analog der oben beschriebenen Vorgehensweise gewechselt. Ein dabei ermittelter Korrekturwert F für die Soll-Dosiermenge D wird bevorzugt vom Rechenmodell übernommen und die weitere Dosierung unter Verwendung des aktualisierten Korrekturwerts F durchgeführt.

**Patentansprüche**

1.  Verfahren zur Ermittlung einer Qualität einer zur Stickoxidverminderung in einem SCR-Abgasreinigungssystem (21) einer Brennkraftmaschine (10) eingesetzten Ammoniak enthaltenden Reduktionsmittellösung, bei welchem eine Dosiereinheit (14) zur Abgabe vorgebbarer Soll-Dosiermengen der Reduktionsmittellösung in das Brennkraftmaschinenabgas angesteuert wird und mittels eines stromab eines SCR-Katalysators (20) des SCR-Abgasreinigungssystems (21) angeordneten NOx-Sensors (17) mit einer Querempfindlichkeit gegenüber Ammoniak eine mit dem Wirkungsgrad ($\varepsilon$) des SCR-Katalysators (20) wenigstens korrelierende Wirkungsgradgröße ermittelt und mit einem vorgebbaren Grenzwert verglichen wird, wobei

- in einem ersten Verfahrensschritt in einem normalen Dosierbetrieb eine erste Soll-Dosiermenge (D) und ein erster Grenzwert vorgesehen sind,
- im Falle einer durch den Vergleich festgestellten, einer nicht ordnungsgemäßen Funktion des SCR-Abgasreinigungssystems (21) entsprechenden Wirkungsgradgröße der normale Dosierbetrieb abgebrochen und in einem zweiten Verfahrensschritt in einen Diagnosebetrieb gewechselt wird, in welchem für eine erste Zeitspanne eine gegenüber der ersten Soll-Dosiermenge (D) erhöhte zweite Soll-Dosiermenge (D) und ein zweiter Grenzwert vorgesehen sind,
- im Falle einer nach Ablauf der ersten Zeitspanne festgestellten vorgebbaren Abweichung der Wirkungsgradgröße vom zweiten Grenzwert in einem dritten Verfahrensschritt eine Konditionierung des SCR-Katalysators (20) derart durchgeführt wird, dass eine im SCR-Katalysator (20) gespeicherte Ammoniakmenge einen vorgebbaren Speichermengengrenzwert unterschreitet, und
- in einem Adaptionsbetrieb als viertem Verfahrensschritt für eine vorgebbare zweite Zeitspanne eine dritte Soll-Dosiermenge (D) und ein dritter Grenzwert vorgesehen sind, wobei im Falle einer nach Ablauf der zweiten Zeitspanne festgestellten vorgebbaren Abweichung der Wirkungsgradgröße vom dritten Grenzwert eine fehlerhafte Qualität der Reduktionsmittellösung diagnostiziert wird.

2. Verfahren nach Anspruch 1,
**dadurch gekennzeichnet,**
**dass** eine Steuereinheit (12) mit einem das SCR-Abgasreinigungssystem (21) wenigstens teilweise beschreibenden Rechenmodell derart vorgesehen ist, dass eine Soll-Dosiermenge (D) ermittelbar ist, mit welcher vorgebbare Werte oder Wertebereiche für eine Speichermenge von im SCR-Katalysator (20) gespeichertem Ammoniak oder einen Wirkungsgrad für einen NOx-Umsatz des SCR-Katalysators (20) geregelt oder gesteuert eingestellt werden können und ferner Grenzwerte für die Wirkungsgradgröße eines ordnungsgemäßen SCR-Abgasreinigungssystems (21) festgelegt werden können.

3. Verfahren nach Anspruch 1 oder 2,
**dadurch gekennzeichnet,**
**dass** im Diagnosebetrieb eine um einen Faktor von 1,1 bis 5 gegenüber der ersten Soll-Dosiermenge (D) erhöhte zweite Soll-Dosiermenge (D) eingestellt wird.

4. Verfahren nach einem der Ansprüche 1 bis 3,
**dadurch gekennzeichnet,**
**dass** die erste Zeitspanne in Abhängigkeit von der zweiten Soll-Dosiermenge (D) so gewählt ist, dass eine über die erste Zeitspanne mit der Reduktionsmittellösung dosierte Ammoniakmenge einer in einem SCR-Katalysator (20) mit an einer Toleranzgrenze vermindertem Ammoniakspeichervermögen unter den vorliegenden Bedingungen einspeicherbaren Ammoniakmenge entspricht.

5. Verfahren nach einem der Ansprüche 1 bis 4,
**dadurch gekennzeichnet,**
**dass** zur Konditionierung eine gegenüber der ersten Soll-Dosiermenge (D) verminderte oder auf Null reduzierte Soll-Dosiermenge (D) und/oder eine gegenüber einem normalen Brennkraftmaschinenbetrieb erhöhte NOx-Rohemission eingestellt werden.

6. Verfahren nach einem der Ansprüche 1 bis 5,
**dadurch gekennzeichnet,**
**dass** die Bedingungen der Konditionierung so lange aufrecht erhalten bleiben, bis infolge einer Abreaktion von im SCR-Katalysator (20) mit im Brennkraftmaschinenabgas enthaltenem NOx eine im SCR-Katalysator (20) gespeicherte Ammoniakmenge einen für einen Ammoniakschlupf maßgebenden Schwellenwert unterschritten hat.

7. Verfahren nach einem der Ansprüche 2 bis 6,
**dadurch gekennzeichnet,**
zur gesteuerten oder geregelten Einstellung der Speichermenge von im SCR-Katalysator (20) gespeichertem Ammoniak oder des Wirkungsgrads ($\varepsilon$) des SCR-Katalysators (20) durch die vom Rechenmodell ermittelte Soll-Dosiermenge (D) ein die Soll-Dosiermenge (D) korrigierender adaptierbarer Korrekturwert vorgesehen ist.

8. Verfahren nach Anspruch 7,
**dadurch gekennzeichnet,**
**dass** im Adaptionsbetrieb eine gesteuerte Einstellung der Soll-Dosiermenge (D) für einen vorgebbaren Soll-Wirkungsgrad ($\varepsilon_{soll}$) des SCR-Katalysators (20) und eine Ermittlung des Wirkungsgrads ($\varepsilon$) des SCR-Katalysators (20) vorgenommen werden, und ferner ein Wert für den Korrekturwert ermittelt wird, welcher für eine vorgebbare Annäherung des Wirkungsgrads ($\varepsilon$) an den Soll-Wirkungsgrad ($\varepsilon_{soll}$) erforderlich ist oder erforderlich wäre und eine fehlerhafte Qualität der Reduktionsmittellösung diagnostiziert wird, wenn der ermittelte Korrekturwert außerhalb eines vorgebbaren Sollbereichs liegt.

## Claims

1. Method for determining a quality of a reducing agent solution containing ammonia, which is used in an SCR exhaust gas purification system (21) of an internal combustion engine (10) to reduce nitrous oxides, in which method a metering unit (14) is activated for delivering presettable target quantities of the reducing agent solution into the internal combustion engine exhaust gas and, by means of a NOx sensor (17) with a cross-sensitivity to ammonia, which is located downstream of an SCR catalytic converter (20) of the SCR exhaust gas purification system (21), an efficiency variable which at least correlates to the efficiency ($\varepsilon$) of the SCR catalytic converter (20) is determined and compared to a presettable limit value, wherein

   - in a first step of the method, a first target metering quantity (D) and a first limit value are provided in a normal metering mode,
   - if an efficiency variable which corresponds to an improper function of the SCR exhaust gas purification system (21) is detected by the comparison, the normal metering mode is aborted and the system switches in a second step of the method to a diagnostic mode, in which a second target metering quantity (D) higher than the first target metering quantity (D) and a second limit value are provided for a first time interval,
   - if a presettable deviation of the efficiency variable from the second limit value is detected on expiry of the first time interval, the SCR catalytic converter (20) is, in a third step of the method, conditioned in such a way that an ammonia quantity stored in the SCR catalytic converter (20) falls below a presettable storage quantity limit value, and
   - in an adaptation mode serving a the fourth step of the method, a third target metering quantity (D) and a third limit value are provided for a presettable second time interval, wherein, if a presettable deviation of the efficiency variable from the third limit value is detected on expiry of the second time interval, a faulty quality of the reducing agent solution is diagnosed.

2. Method according to claim 1,
   **characterised in that**
   a control unit (12) with a calculating model which at least partially describes the SCR exhaust gas purification system (21) is provided in such a way that a target metering quantity (D) can be determined, with which presettable values or value ranges for a storage quantity of ammonia stored in the SCR catalytic converter (20) or an efficiency for a NOx conversion of the SCR catalytic converter (20) can be adjusted under closed- or open-loop control and with which moreover limit values for the efficiency variable of a proper SCR exhaust gas purification system (21) can be specified.

3. Method according to claim 1 or 2,
   **characterised in that**
   in the diagnostic mode, a second target metering quantity (D) increased by a factor of 1.1 to 5 compared to the first target metering quantity (D) is set.

4. Method according to any of claims 1 to 3,
   **characterised in that**
   the first time interval is, as a function of the second target metering quantity (D), chosen such that an ammonia quantity metered with the reducing agent solution over the first time interval corresponds to an ammonia quantity which can be stored under the prevailing conditions in an SCR catalytic converter (20) with an ammonia storage capacity reduced at a tolerance limit.

5. Method according to any of claims 1 to 4,
   **characterised in that**
   for conditioning, a target metering quantity (D) smaller than the first target metering quantity (D) or reduced to zero and/or an NOx raw emission increased relative to a normal internal combustion engine operation is/are set.

6. Method according to any of claims 1 to 5,
   **characterised in that**
   the conditions of the conditioning process are maintained until an ammonia quantity stored in the SCR catalytic converter (20) has fallen below a threshold value relevant to ammonia slip as a result of an abreaction of NOx contained in the internal combustion engine exhaust gas in the SCR catalytic converter (20).

7. Method according to any of claims 2 to 6,
   **characterised in that**
   an adaptable correction value correcting the target metering quantity (D) is provided for the open- or closed-loop control of the storage quantity of ammonia stored in the SCR catalytic converter (20) or of the efficiency ($\varepsilon$) of the SCR catalytic converter (20) by means of the target metering quantity (D) determined by the calculating model.

8. Method according to claim 7,
   **characterised in that**
   in the adaptation mode, a controlled adjustment of the target metering quantity (D) for a presettable target efficiency ($\varepsilon_{soll}$) of the SCR catalytic converter (20) and a determination of the efficiency ($\varepsilon$) of the SCR catalytic converter (20) are carried out, and **in that** a value for the correction value is further determined, which is or would be required for a presettable approximation of the efficiency ($\varepsilon$) to the target efficiency ($\varepsilon_{soll}$), and **in that** a faulty quality of the reducing agent solution is diagnosed if the determined correction value falls outside a presettable target range.

**Revendications**

1. Procédé de détermination d'une qualité d'une solution d'agent de réduction contenant de l'ammoniac utilisée pour diminuer l'oxyde d'azote dans un système d'épuration des gaz d'échappement SCR, consistant à activer une unité de dosage (14) servant à délivrer des doses théoriques pouvant être prédéfinies de la solution d'agent de réduction dans les gaz d'échappement émis par un moteur à combustion interne, et à déterminer, au moyen d'au moins un capteur de NOx (17) présentant une sensibilité transversale à l'ammoniac et monté en aval d'un catalyseur SCR (20) du catalyseur de réduction catalytique sélective (21), au moins une grandeur de rendement en corrélation avec le rendement ($\varepsilon$) du catalyseur SCR, et à la comparer à une valeur limite pouvant être prédéfinie, lors d'une première étape du procédé, on utilise dans un mode de dosage normal une première dose théorique (D) et une première valeur limite, si la comparaison fait apparaître une grandeur de rendement correspondant à un fonctionnement anormal du système SCR d'épuration des gaz d'échappement (21), on passe dans une deuxième étape, à un mode diagnostic, dans lequel on utilise pendant un premier laps de temps une deuxième dose théorique (D) plus grande que la première dose théorique (D) et une deuxième valeur limite, s'il est constaté à l'issue du premier laps de temps que la grandeur de rendement s'écarte de manière pouvant être prédéfinie de la deuxième valeur limite, on effectue lors d'une troisième étape un conditionnement du catalyseur SCR de telle manière qu'une quantité d'ammoniac stockée dans le catalyseur SCR (20) soit inférieure à une valeur limite de quantité stockée prédéfinie et on ajuste dans un mode adaptation dans une quatrième étape pour un deuxième laps de temps pouvant être prédéfini une troisième dose théorique (D) et une troisième valeur limite, s'il est constaté à l'issue du deuxième laps de temps que la grandeur de rendement s'écarte de manière pouvant être prédéfinie de la troisième valeur limite, on diagnostique une qualité défectueuse de la solution d'agent de réduction.

2. Procédé selon la revendication 1, **caractérisé en ce qu'**une unité de commande (12) comprenant un modèle de calcul décrivant au moins en partie le système d'épuration des gaz d'échappement SCR (21) permet de déterminer une dose théorique (D), ladite dose théorique pouvant permettre le réglage ou l'activation de valeurs ou des zones de valeur pouvant être prédéfinies pour une quantité d'ammoniac stockée dans le catalyseur SCR (20) ou un rendement pour une conversion de NOx du catalyseur SCR (20) et en outre pouvant permettre de déterminer des valeurs limites pour la grandeur de rendement d'un système d'épuration des gaz d'échappement SCR (21).

3. Procédé selon la revendication 1 ou la revendication 2, **caractérisé en ce que** dans le mode diagnostic, on augmente une seconde dose théorique (D) par rapport à la première dose théorique (D) d'un facteur compris entre 1,1 et 5.

4. Procédé selon l'une quelconque des revendications de 1 à 3, **caractérisé en ce que** le premier laps de temps est sélectionné en fonction de la seconde dose théorique (D) de manière qu'une quantité d'ammoniac dosée pendant le premier laps de temps comprenant la solution d'agent de réduction corresponde à une quantité d'ammoniac pouvant être stockée dans un catalyseur SCR (20) présentant une capacité de stockage d'ammoniac réduite à une valeur de tolérance dans les conditions présentes.

5. Procédé selon l'une quelconque des revendications de 1 à 4, **caractérisé en ce qu'**il est possible pour le conditionnement de régler une dose théorique (D) réduite par rapport à la première dose théorique (D) ou réduite à zéro et/ou une émission brute de NOx accrue par rapport à un fonctionnement normal d'un moteur à combustion interne.

6. Procédé selon l'une quelconque des revendications 1 à 5, **caractérisé en ce que** les conditions du conditionnement sont maintenues aussi longtemps qu'à la suite d'une réaction du NOx contenu dans les gaz d'échappement émis par un moteur à combustion interne dans le catalyseur SCR (20), une quantité d'ammoniac stockée dans le catalyseur SCR (20) est inférieure à une valeur seuil déterminante pour un glissement d'ammoniac.

7. Procédé selon l'une quelconque des revendications de 2 à 6, **caractérisé en ce qu'**il est prévu pour le réglage régulé ou activé de la quantité stockée d'ammoniac dans le catalyseur SCR (20) ou le rendement (e) du catalyseur SCR (20) une valeur de correction pouvant s'adapter et corriger la dose théorique (D) au moyen de la dose théorique (D) déterminé à partir du modèle de calcul.

8. Procédé selon la revendication 7, **caractérisé en ce qu'**en mode d'adaptation sont effectués un réglage commandé de la dose théorique (D) pour un rendement théorique ($\varepsilon_{soll}$) pouvant être défini du catalyseur SCR (20) et une détermination du rendement ($\varepsilon$) du catalyseur SCR (20) et en outre une valeur de correction est déterminée, laquelle est nécessaire ou serait nécessaire pour une approximation du rendement ($\varepsilon$) par rapport au rendement théorique ($\varepsilon_{soll}$) et pour diagnostiquer une qualité défectueuse de la solution d'agent de réduction lorsque la valeur de correction obtenue se trouve en dehors d'une plage théorique pouvant être prédéfinie.

Fig. 1

Fig. 2a

Fig. 2b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007022594
- EP 1830040 A1